# EUROPEAN PATENT APPLICATION

(11) **EP 4 592 117 A1**
(43) Date of publication of application: **30.07.2025**
(21) Application number: 24223724.6
(22) Date of filing: 30.12.2024
(51) Int. Cl.: B60K 1/00, B60K 11/02, B60L 3/00, B60K 1/04, B60L 15/00

(54) **ELECTRIFIED VEHICLE**

(30) Priority: 23.01.2024 JP 2024008287
(71) Applicant: TOYOTA JIDOSHA KABUSHIKI KAISHA, Aichi-ken, 471-8571 (JP)
(72) Inventor: TAKENAKA, Tetsuhiro, Aichi-ken, 471-8571 (JP); TSUCHIDA, Michitaka, Aichi-ken, 471-8571 (JP); YOSHIKAWA, Makoto, Aichi-ken, 471-8571 (JP); FUKUNAGA, Shota, Aichi-ken, 471-8571 (JP); URANO, Hiroaki, Aichi-ken, 471-8571 (JP); OITA, Shinji, Aichi-ken, 471-8571 (JP); NAGAI, Shingo, Aichi-ken, 471-8571 (JP); KANADA, Yuichiro, Aichi-ken, 471-8571 (JP)
(74) Representative: D Young & Co LLP

(57) **Abstract**

An electrified vehicle includes a drive device (20F, 20R). The drive device (20F, 20R) includes an electric motor (31), a first casing (34) that accommodates the electric motor (31), a power conversion device (42), a second casing (44) that is situated upward from the first casing (34) and is fixed to the first casing (34), and that also accommodates the power conversion device (42). A space is provided between the first casing (34) and the second casing (44), the space passing through, in a vehicle front-rear direction, a first region in which the first casing (34) and the second casing (44) face each other in an up-down direction, wiring (13, 18) or piping (11, 12, 16, 17) is connected to the drive device (20F, 20R), and the wiring (13, 18) or the piping (11, 12, 16, 17) is situated on one side of the space in a vehicle front-rear direction, and also is routed so as to be visible via the space from another side of the space in the vehicle front-rear direction.

## Description

### BACKGROUND OF THE INVENTION

### 1. Field of the Invention

The technology disclosed in the present specification relates to an electrified vehicle. In particular, technology disclosed in the present specification relates to an electrified vehicle equipped with a drive device.

### 2. Description of Related Art

Japanese Unexamined Patent Application Publication No. 2022-105510 (JP 2022-105510 A) discloses a vehicle equipped with a drive motor and a storage battery that is electrically connected to the drive motor. The drive motor is disposed rearward in the vehicle, relative to the storage battery.

### SUMMARY OF THE INVENTION

In the vehicle of JP 2022-105510 A, for example, electrical wiring that electrically connects the drive motor and the storage battery is situated between the two. Accordingly, when attempting to visually confirm the drive motor and the storage battery from rearward in the vehicle, the electrical wiring that electrically connects the two may be hidden by the drive motor, which is situated rearward of the electrical wiring. For this reason, in order to visually confirm a state of connection of the wiring electrically connecting the drive motor and the storage battery, it conventionally has been necessary to remove the drive motor and the storage battery from a vehicle body, for example. The present specification provides technology that enables easier visual confirmation of states of wiring or piping connected to a drive device as compared to conventional arrangements.

An electrified vehicle disclosed in the present specification includes a vehicle body, a drive device that is installed in the vehicle body, a pair of right and left wheels that supports the vehicle body and also is driven by the drive device, and a battery that supplies electric power to the drive device. The drive device includes an electric motor, a first casing that accommodates the electric motor, a power conversion device that is electrically connected to the electric motor, and a second casing that is situated upward from the first casing and is fixed to the first casing, and also that accommodates the power conversion device. A space is provided between the first casing and the second casing, the space passing through, in a vehicle front-rear direction, a first region in which the first casing and the second casing face each other in an up-down direction, wiring or piping is connected to the drive device, and the wiring or the piping is situated on one side of the space in the vehicle front-rear direction, and also is routed so as to be visible via the space from another side of the space in the vehicle front-rear direction.

In the electrified vehicle described above, the wiring or the piping situated on the one side in the vehicle front-rear direction of the space that passes through the first region in the vehicle front-rear direction can be viewed from the other side in the vehicle front-rear direction of the space. Thus, visual confirmation of the state of the wiring or the piping can be performed, as compared to the conventional method. Here, the "state of the wiring or the piping" includes, for example, whether the wiring or the piping is properly connected, whether curvature is maintained in a proper range, and whether there is adhesion of any foreign matter.

Details and further improvements of the technique disclosed in the present specification will be described in "DETAILED DESCRIPTION OF EMBODIMENTS" below.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a block diagram of an electrified vehicle 10 according to a first embodiment;
FIG. 2 is a sectional view taken along line II-II in FIG. 1;
FIG. 3 is a view along a direction of arrow III in FIG. 2;
FIG. 4 is a sectional view taken along line IV-IV in FIG. 1; and
FIG. 5 is a view along a direction of arrow V in FIG. 4.

### DETAILED DESCRIPTION OF EMBODIMENTS

In an embodiment of the present technology, the wiring or the piping may include electrical wiring that electrically connects the battery and the power conversion device.

According to this configuration, a state of the electrical wiring that electrically connects the battery and the power conversion device can be easily visually confirmed via the space.

In an embodiment of the present technology, the vehicle body may include a floor panel. In this case, the battery may be disposed downward from the floor panel on the one side in the vehicle front-rear direction with respect to the drive device.

According to this configuration, the state of the electrical wiring extending upward from the battery situated downward from the floor panel toward the power conversion device can be easily visually confirmed via the space.

In an embodiment of the present technology, at least a portion of the electrical wiring may be situated within a second region in which the wheels face each other in a vehicle right-left direction.

When at least a portion of the electrical wiring is situated within the second region, it is difficult to visually confirm the state of the electrical wiring from the vehicle right-left direction. According to the electrified vehicle described above, the state of the electrical wiring can be easily visually confirmed via the space.

In an embodiment of the present technology, the electrical wiring may include a connector. In this case, the connector may be connected to the second casing in the second region. Note however, that in another embodiment, the connector may be connected to the second casing outside the region where the right and left wheels face each other in the vehicle right-left direction.

In an embodiment of the present technology, the connector may be situated on one side of the space in the vehicle front-rear direction and also be disposed so as to be visible via the space from the other side of the space in the vehicle front-rear direction.

According to this configuration, the connector can be easily visually confirmed from the other side via the space.

In an embodiment of the present technology, the wiring or the piping may include a coolant pipe for circulating a coolant to the drive device.

According to this configuration, the state of the coolant pipe can be easily visually confirmed via the space.

In an embodiment of the present technology, the coolant pipe may connect between the battery and the drive device.

According to this configuration, the state of the coolant pipe extending from the battery situated downward from the floor panel to the power conversion device can be easily visually confirmed via the space.

In an embodiment of the present technology, a height of the space in the vehicle up-down direction may be within a range of 30 mm to 50 mm.

According to this configuration, the wiring or the piping can be reliably visually confirmed via the space, and also the size of the drive device can be suppressed from being larger than necessary in the up-down direction.

In one embodiment of the present technology, the first casing may include a housing extending cylindrically from a first end face to a second end face, a first cover attached to the first end face of the housing, and a second cover attached to the second end face of the housing. In this case, the second casing may be fixed to the first cover and the second cover, and the first region may be a region where the housing of the first casing and the second casing face each other in the up-down direction.

According to this configuration, a relatively broad accommodation space can be provided between the housing that extends cylindrically and the second casing. This enables the state of the wiring or the piping to be visually confirmed more reliably.

In one embodiment of the present technology, the one side in the vehicle front-rear direction may be forward in the vehicle front-rear direction, and the other side in the vehicle front-rear direction may be rearward in the vehicle front-rear direction. Note however, that in another embodiment, the one side in the vehicle front-rear direction may be rearward in the vehicle front-rear direction, and the other side in the vehicle front-rear direction may be forward in the vehicle front-rear direction.

In an embodiment of the present technology, the right and left wheels may be a pair of right and left rear wheels. Note however, that in another embodiment, the right and left wheels may be a pair of right and left front wheels.

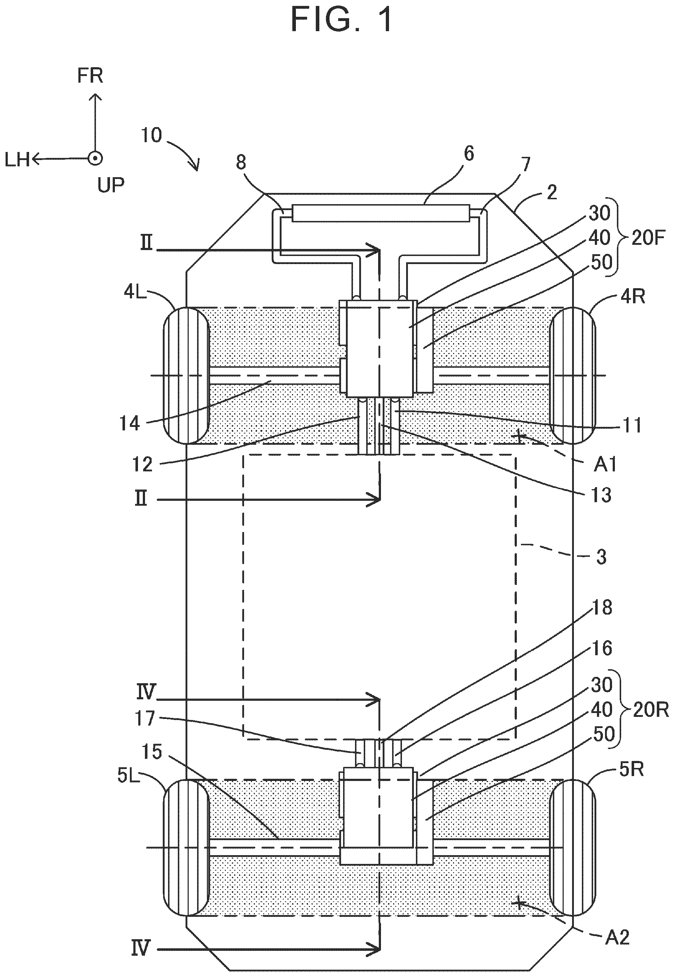

FIG. 1 is a block diagram illustrating an electrified vehicle 10 according to a first embodiment as viewed from an upward side. In the present specification, forward of the electrified vehicle 10 (i.e., upward in the plane of the drawing of FIG. 1) may be simply referred to as "front", and an opposite side thereof may be simply referred to as "rear". Further, leftward of the electrified vehicle 10 (i.e., leftward in the plane of the drawing of FIG. 1) may be simply referred to as "left", and an opposite side thereof may be simply referred to as "right". Also, upward of the electrified vehicle 10 (i.e., a near-side direction of the plane of the drawing of FIG. 1) may be simply referred to as "up", and an opposite side thereof may be simply referred to as "down".

The electrified vehicle 10 includes a vehicle body 2, a battery 3, a pair of right and left front wheels 4R and 4L, a pair of right and left rear wheels 5R and 5L, a radiator 6, a front shaft 14, a rear shaft 15, a front drive device 20F, and a rear drive device 20R. The electrified vehicle 10 travels by using the front drive device 20F to drive the right and left front wheels 4R and 4L, and by using the rear drive device 20R to drive the right and left rear wheels 5R and 5L. The electrified vehicle 10 is a so-called four-wheel drive vehicle. Note that the term "electrified vehicle" as used in the present specification includes a rechargeable-type battery electric vehicle that is charged by an external power source, a fuel cell electric vehicle that includes a fuel cell as a power source, a hybrid electric vehicle that also includes an engine, and so forth, for example. Hereinafter, the expression "pair of right and left" may be referred to simply as "right and left".

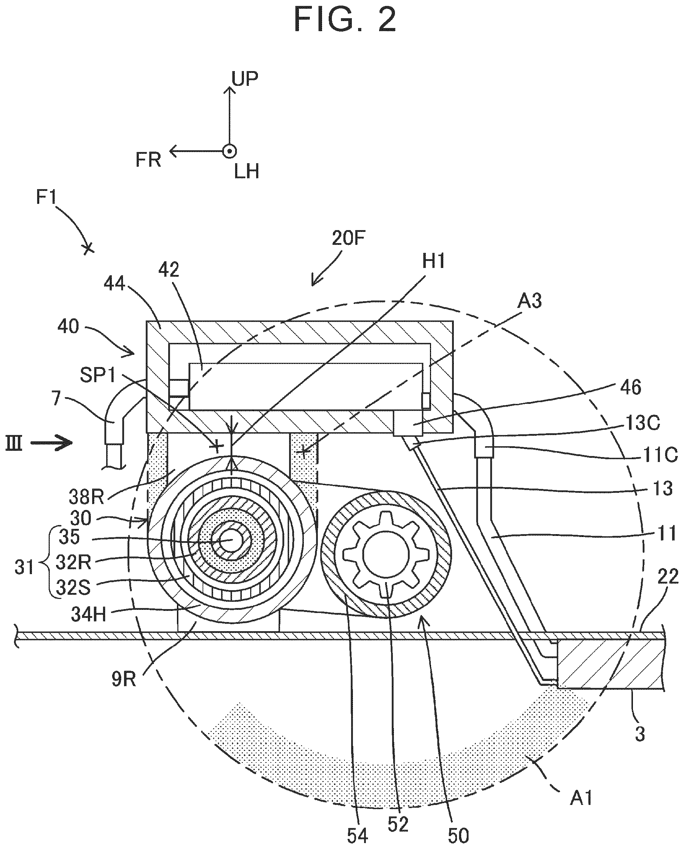

The battery 3 is disposed downward from a floor panel 22 (see FIG. 2) of the vehicle body 2. The battery 3 has a lithium-ion battery cell, for example, built in. In a modification, the battery 3 may have some other secondary battery cell (nickel-metal hydride battery cell, all-solid-state battery cell) built in.

The front wheels 4R and 4L are situated at a right end and a left end of the front shaft 14, respectively. The front wheels 4R and 4L support the vehicle body 2 of the electrified vehicle 10 via the front shaft 14. The front shaft 14 extends linearly in a right-left direction. Accordingly, the front wheels 4R and 4L face each other in a region A1.

In the same way, the rear wheels 5R and 5L are situated at a right end and a left end of the rear shaft 15, respectively. The rear wheels 5R and 5L support the vehicle body 2 of the electrified vehicle 10 via the rear shaft 15. The rear shaft 15 extends linearly in the right-left direction. Accordingly, the rear wheels 5R and 5L face each other in a region A2.

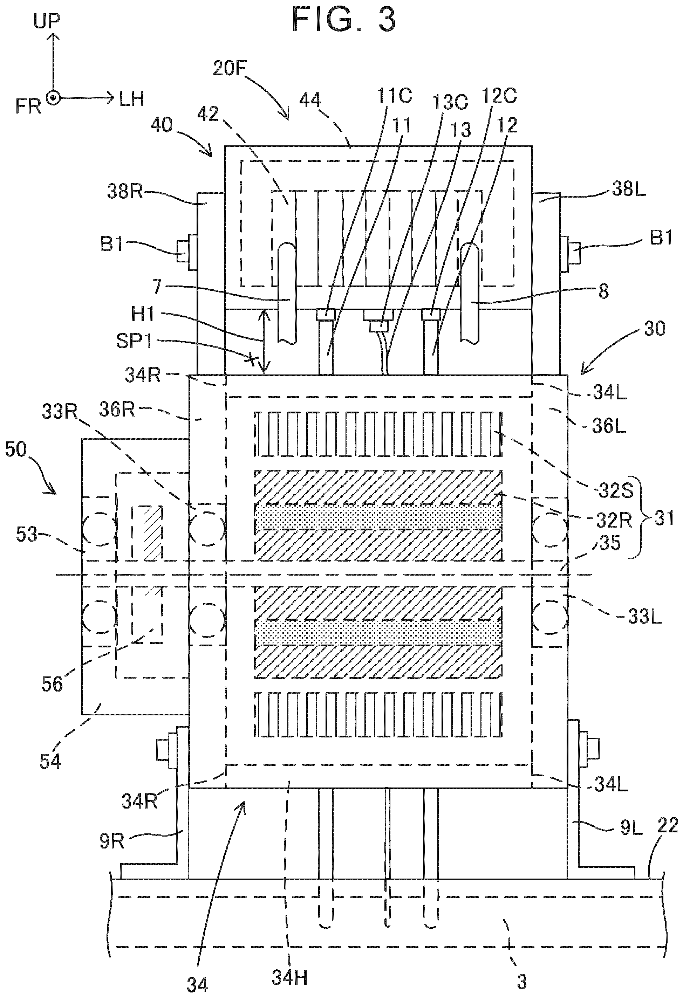

The front drive device 20F includes a motor unit 30, an inverter unit 40, and a transmission mechanism unit 50. The inverter unit 40 is situated upward from the motor unit 30 (i.e., near-side direction of the plane of the drawing in FIG. 1) and is electrically connected to the motor unit 30. The inverter unit 40 is electrically connected to the battery 3 by electrical wiring 13 extending rearward from a rear end of the inverter unit 40. The inverter unit 40 is supplied with direct current electric power from the battery 3 via the electrical wiring 13. The transmission mechanism unit 50 has a side portion extending in a front-rear direction rightward of the motor unit 30 and a rear portion extending in a right-left direction rearward of the motor unit 30. The transmission mechanism unit 50 is mechanically connected to the front shaft 14, details of which will be described later with reference to FIGS. 2 and 3. The front drive device 20F drives the front wheels 4R and 4L via the front shaft 14.

The rear drive device 20R basically has the same configuration as the front drive device 20F. Accordingly, the rear drive device 20R also includes a motor unit 30, an inverter unit 40, and a transmission mechanism unit 50. In the rear drive device 20R, the inverter unit 40 is electrically connected to the battery 3 by electrical wiring 18 extending forward from a front end of the inverter unit 40. Thus, the inverter unit 40 is supplied with direct current electric power from the battery 3 via the electrical wiring 18. In the rear drive device 20R, the transmission mechanism unit 50 is mechanically connected to the rear shaft 15. The rear drive device 20R drives the rear wheels 5R and 5L via the rear shaft 15.

The radiator 6 is disposed at a front end portion of the electrified vehicle 10. The radiator 6 is a device that exchanges heat between coolant and ambient air. The coolant is a liquid such as antifreeze, water, or the like. The radiator 6 cools the coolant, for example, by using breeze generated by a cooling fan (omitted from illustration). The radiator 6 is connected to the inverter unit 40 of the front drive device 20F by a first coolant pipe 7 and a second coolant pipe 8. The inverter unit 40 is connected to the battery 3 by a third coolant pipe 11 and a fourth coolant pipe 12. The battery 3 is connected to the inverter unit 40 of the drive device 20R by a fifth coolant pipe 16 and a sixth coolant pipe 17. The coolant is made to flow by a radiator pump (omitted from illustration) in the order of the first coolant pipe 7, the inverter unit 40 of the front drive device 20F, the third coolant pipe 11, the battery 3, the fifth coolant pipe 16, the inverter unit 40 of the rear drive device 20R, the sixth coolant pipe 17, the battery 3, the fourth coolant pipe 12, the inverter unit 40, the second coolant pipe 8, and then returns to the radiator 6. In this way, the coolant circulates through the inverter unit 40 of the front drive device 20F, the battery 3, and the inverter unit 40 of the rear drive device 20R, thereby performing cooling thereof. Note that in a modification, the coolant may be supplied to the battery 3 by circulating through the motor unit 30 of the front drive device 20F after or before the inverter unit 40 of the front drive device 20F, or the coolant may bypass the battery 3 and be supplied directly to the rear drive device 20R.

Next, a detailed structure of the front drive device 20F will be described with reference to FIGS. 2 and 3. FIG. 2 is a sectional view of the vicinity of the front drive device 20F, taken along line II-II in FIG. 1. FIG. 3 is a view of the front drive device 20F, along a direction of arrow III in FIG. 2.

As illustrated in FIG. 2, the front drive device 20F is installed in a front compartment F1 of the electrified vehicle 10. FIG. 3 illustrates the front drive device 20F in a state in which a front hood (omitted from illustration) of the electrified vehicle 10 is open, viewing inside of the front compartment F1 from the forward direction.

As illustrated in FIG. 3, the front drive device 20F is fixed to a floor panel 22 of the vehicle body 2 by a pair of brackets 9R and 9L. The motor unit 30 of the front drive device 20F includes an electric motor 31 and a first casing 34. The electric motor 31 includes a rotor 32R having a cylindrical shape extending in the right-left direction, a stator 32S facing an outer peripheral face of the rotor 32R from an outer side in a radial direction, and a motor shaft 35 extending in the right-left direction, passing through the rotor 32R. The rotor 32R includes a permanent magnet. The electric motor 31 is a radial type motor. In a modification, the electric motor 31 may be an axial type motor.

The first casing 34 includes a housing 34H, a first cover 36R, and a second cover 36L. The housing 34H faces an outer peripheral face of the stator 32S of the electric motor 31 from the outer side in the radial direction. A first end face 34R situated at a right end of the housing 34H and a second end face 34L situated at a left end thereof define openings at the right and left ends of the housing 34H. The housing 34H is cylindrical and extends in the right-left direction from the first end face 34R to the second end face 34L.

The first cover 36R is attached from a rightward side to the first end face 34R of the housing 34H. The first cover 36R has a flat plate shape extending in a direction perpendicular to the motor shaft 35 of the electric motor 31, and covers the opening of the first end face 34R of the housing 34H from the rightward side thereof. The first cover 36R is provided with a first bearing 33R. The first bearing 33R rotatably holds the motor shaft 35.

In the same way, the second cover 36L is attached from a leftward side to the second end face 34L of the housing 34H. The second cover 36L has a flat plate shape extending in the direction perpendicular to the motor shaft 35 of the electric motor 31, and covers the opening of the second end face 34L of the housing 34H from the leftward side thereof. The second cover 36L is provided with a second bearing 33L. The second bearing 33L rotatably holds the motor shaft 35.

The first cover 36R includes a first stay 38R extending upward from an upper end of the first cover 36R toward the inverter unit 40. In the same way, the second cover 36L includes a second stay 38L extending upward from an upper end of the second cover 36L toward the inverter unit 40.

The inverter unit 40 includes an inverter 42 and a second casing 44. The inverter 42 is a power conversion device that converts the direct current electric power of the battery 3 into alternating current electric power that is suitable for the electric motor 31. Further, the inverter 42 may include a converter function for boosting the direct current electric power of the battery 3, for example. The second casing 44 accommodates the inverter 42.

As illustrated in FIGS. 2 and 3, the inverter 42 is electrically connected to the battery 3 disposed downward from the floor panel 22, via the electrical wiring 13. The electrical wiring 13 extends upward from a front end of the battery 3, and passes through the floor panel 22, to the second casing 44. Accordingly, the electrical wiring 13 extends beyond an upper end of the housing 34H rearward from the motor unit 30, to the second casing 44. A connector 13C is disposed at an upper end of the electrical wiring 13. The connector 13C is connected to a connecting portion 46 situated on a lower face of a rear portion of the second casing 44. Also, the connector 13C is situated between the front wheels 4R and 4L. That is to say, the connector 13C is connected to the connecting portion 46 of the second casing 44 within the region A1 (see FIG. 2).

In the same way, the inverter 42 is connected to the battery 3 via the third coolant pipe 11 and the fourth coolant pipe 12. The third coolant pipe 11 and the fourth coolant pipe 12 each extend upward from the front end of the battery 3, and pass through the floor panel 22, to the second casing 44. Accordingly, the third coolant pipe 11 and the fourth coolant pipe 12 extend beyond the upper end of the housing 34H rearward from the motor unit 30 to the second casing 44. Connection pipes 11C and 12C are disposed on a rear end face of the second casing 44, bending and extending downward from the rear end face. An upper end of the third coolant pipe 11 is connected to the connection pipe 11C, and an upper end of the fourth coolant pipe 12 is connected to the connection pipe 12C. The upper ends of the third coolant pipe 11 and the fourth coolant pipe 12 are both situated between the front wheels 4R and 4L. That is to say, the upper ends of the third coolant pipe 11 and the fourth coolant pipe 12 are respectively connected to the connection pipes 11C and 12C of the second casing 44 within the region A1.

Also, as illustrated in FIG. 3, the side portion of the transmission mechanism unit 50 is attached to the first cover 36R. The transmission mechanism unit 50 includes a plurality of gears 52 (see FIG. 2), 56, and a third casing 54 that accommodates the gears 52 and 56. The motor shaft 35 of the electric motor 31 passes through the first cover 36R and extends further rightward (i.e., leftward in the plane of the drawing of FIG. 3) and is rotatably held by a third bearing 53 of the third casing 54. The motor shaft 35 rotates the gear 56 within the third casing 54. The gear 56 meshes with the gear 52 illustrated in FIG. 2, via a plurality of gears (omitted from illustration). The gear 52 is fixed to the front shaft 14. When the gear 56 is rotated by the motor shaft 35, the gear 52 rotates, and the front wheels 4R and 4L are driven via the front shaft 14 (see FIG. 1).

The first stay 38R and the second stay 38L of the motor unit 30 extend upward toward the second casing 44 of the inverter unit 40. A right end of the second casing 44 of the inverter unit 40 is fixed to the first stay 38R of the motor unit 30 via a bolt B1. In the same way, a left end of the second casing 44 is fixed to the second stay 38L via a bolt B1. Accordingly, the second casing 44 of the inverter unit 40 is held upward from the first casing 34 of the motor unit 30. As a result, a space SP1 is provided between the housing 34H of the first casing 34 and the second casing 44. As illustrated in FIG. 2, the space SP1 passes through a region A3 provided between the housing 34H of the first casing 34 and the second casing 44. Here, the region A3 is a region where the housing 34H of the first casing 34 and the second casing 44 face each other in an up-down direction.

As illustrated in FIG. 2, the electrical wiring 13 is connected to the connecting portion 46 of the second casing 44 rearward of the space SP1. Accordingly, the electrical wiring 13 is situated rearward with respect to the space SP1. In the same way, the third coolant pipe 11 and the fourth coolant pipe 12 are also connected to the connection pipes 11C and 12C of the second casing 44 rearward of the space SP1. Accordingly, the third coolant pipe 11 and the fourth coolant pipe 12 are also situated rearward with respect to the space SP1.

As illustrated in FIG. 2, in the region A3, there are no members in forward of the electrical wiring 13 and the third coolant pipe 11 that obstruct the view thereof. In other words, forward and rearward of the space SP1 are open to outside of the front drive device 20F. That is to say, the space SP1 is provided between the housing 34H of the first casing 34 and the second casing 44, passing through the region A3 in the front-rear direction.

That is to say, as illustrated in FIG. 3, within the front compartment F1, the electrical wiring 13, the third coolant pipe 11 and the fourth coolant pipe 12 situated rearward of the space SP1 are routed so as to be visible from a forward side of the space SP1. Also, the space SP1 has a height H1 in the up-down direction. The height H1 is, for example, 30 mm. Accordingly, the size of the front drive device 20F in the up-down direction can be suppressed from becoming large, while ensuring visibility of the electrical wiring 13, the third coolant pipe 11, and the fourth coolant pipe 12 from forward of the space SP1. Thus, accommodation space of the front compartment F1 can be increased. Note that in a modification, the height H1 of the space SP1 may be 40 mm, or may be 50 mm, for example.

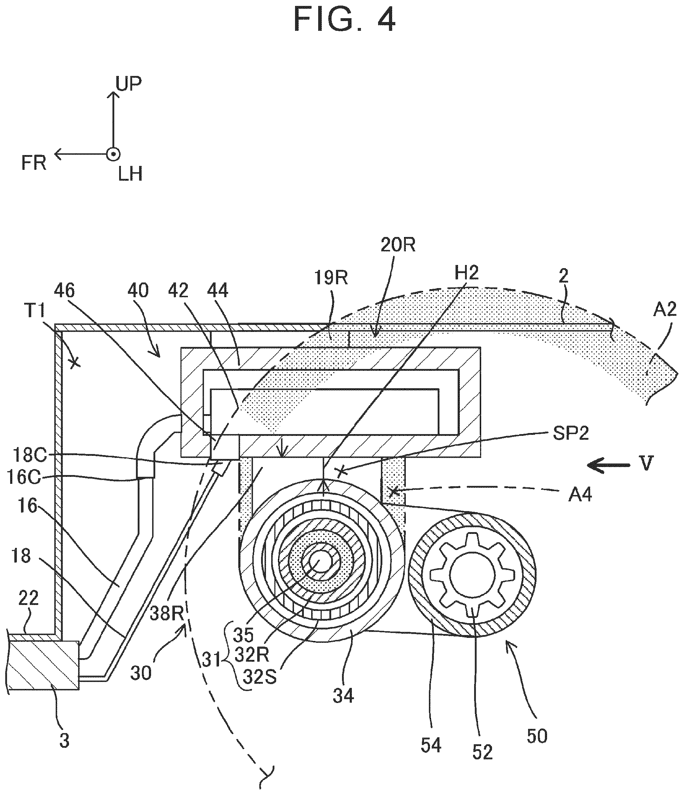

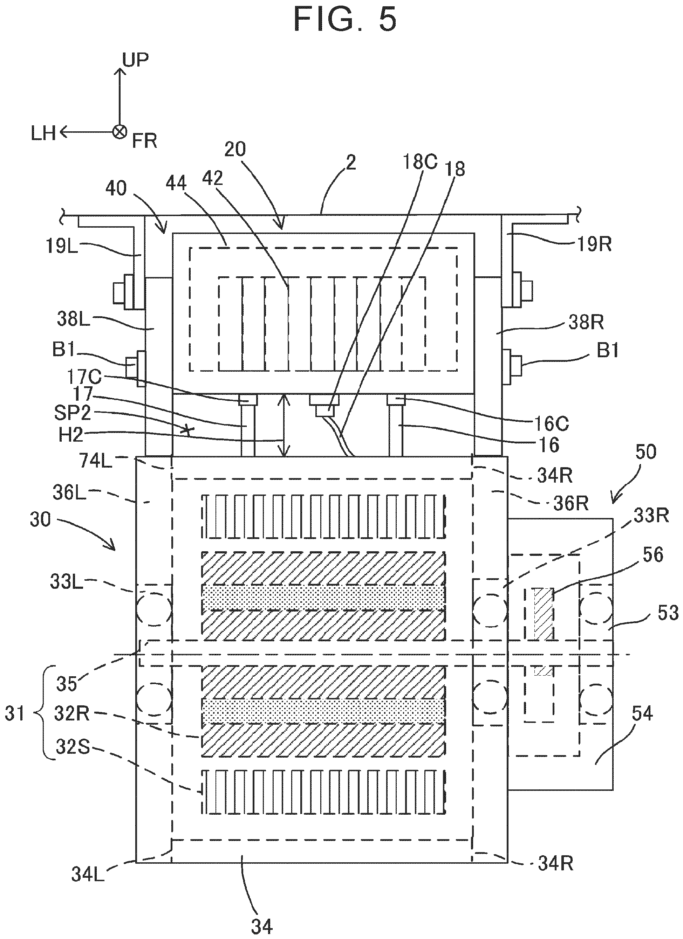

Next, a detailed structure of the rear drive device 20R will be described with reference to FIGS. 4 and 5. FIG. 4 is a sectional view of the vicinity of the rear drive device 20R, taken along line IV-IV in FIG. 1. FIG. 5 is a view of the rear drive device 20R along a direction of arrow V in FIG. 4.

As illustrated in FIG. 4, the rear drive device 20R is disposed within a tunnel T1. The tunnel T1 is a space situated downward from the rear portion of the vehicle body 2.

FIG. 5 illustrates the rear drive device 20R when, for example, a worker situated downward from the electrified vehicle 10 views the electrified vehicle 10 from rearward.

As illustrated in FIG. 5, the rear drive device 20R is installed on an underside of the vehicle body 2 by a pair of brackets 19R and 19L. As described earlier, the rear drive device 20R basically has the same configuration as the front drive device 20F described above. Accordingly, a space SP2 having a height H2 is provided between the housing 34H of the first casing 34 and the second casing 44 of the rear drive device 20R. As illustrated in FIG. 4, the space SP2 passes through a region A4 provided between the housing 34H of the first casing 34 and the second casing 44 of the rear drive device 20R. Here, the region A4 is a region where the housing 34H of the first casing 34 and the second casing 44 face each other in the up-down direction. In the same way as with the space SP1 that is described above, the height H2 of the space SP2 is, for example, 30 mm. Accordingly, the size of the rear drive device 20R in the up-down direction can be suppressed from becoming large, while ensuring visibility of the electrical wiring 18, the fifth coolant pipe 16, and the sixth coolant pipe 17 from rearward of the space SP2. This enables accommodation space of the tunnel T1 to be made larger. Note that in a modification, the height H2 of the space SP2 may be 40 mm, or may be 50 mm, for example.

As illustrated in FIGS. 4 and 5, in the rear drive device 20R, the inverter 42 is electrically connected to the battery 3 disposed downward from the floor panel 22 via the electrical wiring 18. The electrical wiring 18 extends upward from a rear end of the battery 3 to the second casing 44 of the rear drive device 20R. Accordingly, the electrical wiring 18 extends beyond the upper end of the housing 34H rearward from the motor unit 30, to the second casing 44. A connector 18C is disposed at an upper end of the electrical wiring 18. The connector 18C is connected to a connecting portion 46 disposed on an underside of a front portion of the second casing 44. The connector 18C is situated between the rear wheels 5R and 5L. That is to say, as illustrated in FIG. 4, the connector 18C is connected to the connecting portion 46 of the second casing 44 within the region A2.

In the same way, the inverter 42 is connected to the battery 3 via the fifth coolant pipe 16 and the sixth coolant pipe 17. The fifth coolant pipe 16 and the sixth coolant pipe 17 each extend upward from the rear end of the battery 3, to the second casing 44. Accordingly, the fifth coolant pipe 16 and the sixth coolant pipe 17 extend beyond the upper end of the housing 34H rearward from the motor unit 30 to the second casing 44. Connection pipes 16C and 17C are disposed on a front end face of the second casing 44, bending and extending downward from the front end face. An upper end of the fifth coolant pipe 16 is connected to the connection pipe 16C, and an upper end of the sixth coolant pipe 17 is connected to the connection pipe 17C. The upper ends of the fifth coolant pipe 16 and the sixth coolant pipe 17 are both situated between the rear wheels 5R and 5L. The fifth coolant pipe 16 and the sixth coolant pipe 17 are respectively connected to the connection pipes 16C and 17C of the second casing 44 within the region A2.

As illustrated in FIG. 4, the electrical wiring 18 is connected to the connecting portion 46 of the second casing 44 forward of the space SP2. Accordingly, the electrical wiring 18 is situated on the forward side with respect to the space SP2. In the same way, the fifth coolant pipe 16 and the sixth coolant pipe 17 are also connected to the connection pipes 16C and 17C of the second casing 44 forward of the space SP2. Accordingly, the fifth coolant pipe 16 and the sixth coolant pipe 17 are also situated on the forward side with respect to the space SP2.

Within the region A4, there are no members obstructing the view rearward of the electrical wiring 18, the fifth coolant pipe 16, and the sixth coolant pipe 17. In other words, forward and rearward of the space SP2 are open to outside of the rear drive device 20R. That is to say, in the rear drive device 20R, the space SP2 is provided between the housing 34H of the first casing 34 and the second casing 44, passing through the region A4 in the front-rear direction.

That is to say, as illustrated in FIG. 5, within the tunnel T1, the electrical wiring 18, the fifth coolant pipe 16, and the sixth coolant pipe 17 situated on the forward side of the space SP2 are routed so as to be visible from the rearward side of the space SP2.

In the front drive device 20F, the electrical wiring 13, the third coolant pipe 11, and the fourth coolant pipe 12, which are situated on the rearward side of the space SP1, can be visually confirmed from the forward side of the space SP1. In the same way, in the rear drive device 20R, the electrical wiring 18, the fifth coolant pipe 16, and the sixth coolant pipe 17, which are situated on the forward side of the space SP2, can be visually confirmed from the rearward side of the space SP2. In this way, according to the electrified vehicle 10 of the present embodiment, it is easier to visually confirm the state of each of the electrical wirings 13 and 18, and each of the coolant pipes 11, 12, 16, and 17, for example, as compared to the related art in which the drive devices 20F and 20R, and the battery 3, are removed from the vehicle body 2 in order to visually confirm the state of each of the electrical wirings 13 and 18, and each of the coolant pipes 11, 12, 16, and 17. For example, visual confirmation of whether the electrical wiring 13 is maintaining a curvature within an appropriate range can be easily performed.

Also, according to the electrified vehicle 10, the connector 13C of the electrical wiring 13 is situated rearward of the space SP1, and accordingly the state of connection as to the connecting portion 46 of the inverter unit 40 can be easily visually confirmed from forward via the space SP1. Further, the upper end of the third coolant pipe 11 connected to the connection pipe 11C is situated rearward of the space SP1, and accordingly the state of connection between the connection pipe 11C and the third coolant pipe 11 can be easily visually confirmed from forward via the space SP1.

Also, as described above, for example, the connector 13C and the connecting portion 46 are connected within the region A1. Accordingly, when visually confirming the state of the connector 13C from the rightward side, for example, it is necessary to remove the front wheel 4R. In the electrified vehicle 10, the state of the connector 13C can be easily visually confirmed from forward via the space SP1 without removing the front wheel 4R. In the same way, the connection pipe 11C and the upper end of the third coolant pipe 11 are connected within the region A1. Accordingly, in the electrified vehicle 10, the state of the third coolant pipe 11 can be easily visually confirmed from forward via the space SP1 without removing the front wheel 4R. In the same way, the connector 18C and the connecting portion 46 are connected within the region A2, and accordingly the state of the connector 18C can be easily visually confirmed from rearward via the space SP2 without removing the rear wheel 5R.

The front drive device 20F and the rear drive device 20R are each an example of "drive device". The front wheels 4R and 4L, and the rear wheels 5R and 5L, are an example of "wheels". The inverter 42 is an example of "power conversion device". Each of the regions A1 and A2 is an example of "first region". Each of the regions A3 and A4 is an example of "second region".

Although specific examples of the technology disclosed in the present specification have been described in detail above, these are merely exemplary, and are not intended to limit the scope of the claims. The technology described in the claims encompasses various modifications and alterations of the specific examples exemplified above. Modifications of the above embodiments will be described below.

As a first modification, the electrified vehicle 10 may be provided with just the front drive device 20F, or may be provided with just the rear drive device 20R.

As a second modification, the front drive device 20F may be situated on the rearward side of the space SP1 and also include wiring that electrically connects the electric motor 31 and the inverter 42. In this case, the electrical wiring 13 does not need to be situated on the rearward side of the space SP1.

As a third modification, the connector 13C does not have to be situated within the region A1. In a further modification, the connector 13C may be connected to the connecting portion 46 provided on the rear end face of the second casing 44. In this modification, the connector 13C does not have to be situated rearward of the space SP1.

As a fourth modification, the height H1 of the space SP1 may be smaller than 30 mm, or may be larger than 50 mm.

As a fifth modification, in the above-described embodiment, the second casing 44 of the inverter unit 40 is fixed to each of the covers 36R and 36L of the motor unit 30. In the present modification, the second casing 44 may be fixed to a bracket provided on the upper surface of the first casing 34 of the motor unit 30, for example.

As a sixth modification, each of the drive devices 20F and 20R does not have to include the transmission mechanism unit 50. In this case, the transmission mechanism unit 50 may be disposed away from each of the drive devices 20F, 20R. In another modification, the third casing 54 of the transmission mechanism unit 50 may be adjacent to the first casing 34 of the motor unit 30 from rearward, or may be adjacent from the right-left direction.

The technical elements described in the present specification or the drawings exhibit technical utility alone or in various combinations, and are not limited to the combinations set forth in the claims as originally filed. The technique exemplified in the present specification or the drawings may achieve a plurality of objects at the same time, and has technical utility in itself by achieving one of the objects.

## Claims

1. An electrified vehicle, comprising:
a vehicle body (2);
a drive device (20F, 20R) that is installed in the vehicle body (2);
a pair of right and left wheels (4L, 4R, 5L, 5R) that supports the vehicle body (2) and also is driven by the drive device (20F, 20R); and
a battery (3) that supplies electric power to the drive device (20F, 20R), wherein
the drive device (20F, 20R) includes
an electric motor (31),
a first casing (34) that accommodates the electric motor (31),
a power conversion device (42) that is electrically connected to the electric motor (31), and
a second casing (44) that is situated upward from the first casing (34) and is fixed to the first casing (34), and also that accommodates the power conversion device (42),
a space is provided between the first casing (34) and the second casing (44), the space passing through, in a vehicle front-rear direction, a first region in which the first casing (34) and the second casing (44) face each other in an up-down direction,
wiring (13, 18) or piping (11, 12, 16, 17) is connected to the drive device (20F, 20R), and
the wiring (13,18) or the piping (11, 12, 16, 17) is situated on one side of the space in the vehicle front-rear direction, and also is routed so as to be visible via the space from another side of the space in the vehicle front-rear direction.

2. The electrified vehicle according to claim 1, wherein the wiring (13,18) or the piping (11, 12, 16, 17) includes electrical wiring that electrically connects the battery (3) and the power conversion device (42).

3. The electrified vehicle according to claim 2, wherein
the vehicle body (2) includes a floor panel, and
the battery (3) is disposed downward from the floor panel on the one side in the vehicle front-rear direction with respect to the drive device (20F, 20R).

4. The electrified vehicle according to claim 3, wherein at least a portion of the electrical wiring is situated within a second region in which the right and left wheels (4L, 4R, 5L, 5R) face each other in a vehicle right-left direction.

5. The electrified vehicle according to claim 4, wherein
the electrical wiring includes a connector, and
the connector is connected to the second casing (44) in the second region.

6. The electrified vehicle according to claim 5, wherein the connector is situated on one side of the space in the vehicle front-rear direction and also is disposed so as to be visible via the space from the other side of the space in the vehicle front-rear direction.

7. The electrified vehicle according to claim 1, wherein the wiring (13,18) or the piping (11, 12, 16, 17) includes a coolant pipe for circulating a coolant to the drive device (20F, 20R).

8. The electrified vehicle according to claim 7, wherein the coolant pipe connects between the battery (3) and the drive device (20F, 20R).

9. The electrified vehicle according to claim 1, wherein a height of the space in the up-down direction of a vehicle is within a range of 30 mm to 50 mm.

10. The electrified vehicle according to claim 1, wherein
the first casing (34) includes a housing extending cylindrically from a first end face to a second end face, a first cover attached to the first end face of the housing, and a second cover attached to the second end face of the housing,
the second casing (44) is fixed to the first cover and the second cover, and
the first region is a region where the housing of the first casing (34) and the second casing (44) face each other in the up-down direction.

11. The electrified vehicle according to any one of claims 1 to 9, wherein
the one side in the vehicle front-rear direction is forward in the vehicle front-rear direction, and
the other side in the vehicle front-rear direction is rearward in the vehicle front-rear direction.

12. The electrified vehicle according to any one of claims 1 to 9, wherein the right and left wheels (4L, 4R, 5L, 5R) are a pair of right and left rear wheels.

13. The electrified vehicle according to any one of claims 1 to 9, wherein
the one side in the vehicle front-rear direction is rearward in the vehicle front-rear direction, and
the other side in the vehicle front-rear direction is forward in the vehicle front-rear direction.

14. The electrified vehicle according to any one of claims 1 to 9, wherein the right and left wheels (4L, 4R, 5L, 5R) are a pair of right and left front wheels.
